# EUROPEAN PATENT APPLICATION

(11) **EP 2 037 393 A2**
(43) Date of publication of application: **18.03.2009**
(21) Application number: 08252841.5
(22) Date of filing: 28.08.2008
(51) Int. Cl.: G06K 7/00

(54) **RF tag r/w (reader/writer) control method and control apparatus**

(30) Priority: 11.09.2007 JP 2007235641
(71) Applicant: Hitachi Ltd., Chiyoda-ku Tokyo 100-8280 (JP)
(72) Inventor: Mochizuki, Tomoyuki, Tokyo 100-8220 (JP); Itoh, Akihiro, Tokyo 100-8220 (JP); Komaki, Daisuke, Tokyo 100-8220 (JP); Matsui, Yusuke, Tokyo 100-8220 (JP)
(74) Representative: Calderbank, Thomas Roger

(57) **Abstract**

A failure of execution of an R/W control command with respect to plural RF tags that are attached to a moving thing occurs. There are disclosed a method and apparatus for controlling an R/W (reader/writer) that performs a read/write operation on RF tags attached to a moving body. In this case, the RF tags that are attached to the moving body are detected using the R/W. A schedule that determines execution timing of a control command of the R/W that performs a data read/write operation on the RF tags in accordance with the detected RF tags is created. The R/W control command is executed with respect to the RF tags using the R/W in accordance with timing that is determined in the created schedule.

## Description

The present invention relates to an R/W (Reader/writer) control method that performs a read/write operation on RF tags that move on a belt conveyor or a gate in a system using an RFID (Radio Frequency Identification) and a control apparatus.

In recent years, in the scene of the manufacturing or physical distribution, the administration of products using an RFID technology has been performed. In the management of products using an RFID, RFID tags (IC tags or wireless tags) are attached to the products and information that is written in the RFID tags is read out, thereby identifying the individual products. If the RFID tags are used, plural products can be detected at one time. Therefore, incoming product inspection or stocktaking that is comparison work between a list of products and actual products can be efficiently performed.

The RFID tags may be classified into two types. One is an active-type RFID tag that transmits data by itself, and the other is a passive-type RFID tag that receives a request from an R/W and executes a corresponding process in response to the request. In the description below, the description is given to the passive-type RFID tag (hereinafter, simply referred to as RF tag).

In general, each of the RF tags stores two types of data that are a UID (Unique Identifier) and user data (data used in a format that a user of the RF tag has determined depending on the intended use). Commands that are executed with respect to the RF tags include an inventory command that instructs to simultaneously read UIDs of plural RF tags, and a read command or a write command that instructs to read/write data, such as user data of the RF tag selected by designating a UID. First, a list of UIDs of plural RF tags is obtained according to the inventory command. Then, the individual UIDs are sequentially designated among the list of UIDs of the plural RF tags and the read/write command is executed, which makes it possible to perform a read/write operation on the plural RF tags.

One or more antennas are connected to the R/W that performs a read/write operation on the RF tags. When a read/write operation is performed on the RF tags using the R/W, any one of the antennas that are connected to the R/W is allowed to become active, and electromagnetic waves are radiated from the active antenna to enable communication between the R/W and the RF tags, thereby realizing a read/write operation on the RF tags.

In the case where the relative locations between the RF tags and the antennas do not change like the case where products to which the RF tags are attached are loaded on the antennas of the R/W and the RF tags are read, the inventory command is executed to read the UIDs of the RF tags, and a read/write command is executed by the antennas that have read the UIDs to read/write data of the RF tags.

However, in the case where the locations of the antennas are fixed and the RF tags move by loading the products to which the RF tags are attached on a belt conveyor or making the products pass through a gate, or in the case where the RF tags are fixed and the antennas move, that is, the relative locations between the RF tags and the antennas change, it becomes difficult to perform a read/write operation on the RF tags. This reason is as follows. When data of the RF tags is read/written, an antenna read range may be beyond a read range of the antennas that have read the UIDs due to the change in the relative locations, which fails to execute the read/write command by the antennas that have read the UIDs.

In order to solve this problem, as the related art for performing a read/write operation on the moving RF tags, there is a JP-A-2006-172101. According to the technology that is disclosed in JP-A-2006-172101, an antenna that performs a read/write operation on the RF tags is disposed such that a detection area becomes substantially continuous, so as to widen a read range, thereby increasing an accessible time with respect to the RF tags. Time for which the antenna becomes active is set in accordance with the movement speed of the RF tags and the antenna is switched in accordance with the movement of the RF tags. As a result, a read/write operation can be performed on the RF tags even if the RF tags move at a high speed.

In JP-A-2006-172101, the continuous detection area is obtained by overlapping the detection areas of the antennas. However, actually, even though the detection areas overlap, command request transmission from the R/W and response reception from the RF tags should be performed by the same antenna. In general, the R/W forces the request transmission and the response reception to be performed by the same antenna. If the RF tags move between the request transmission and the response reception, the R/W cannot receive a result that is obtained by performing a read/write operation on the RF tags. As a result, read data may not be obtained from the RF tags or it may be impossible to know whether data is successfully written in the RF tags or not. For this reason, transmission and reception of the command need to be executed by the same antenna so as to accurately perform the transmission and reception between the request transmission and the response reception.

According to an aspect of the invention, the following problems can be resolved.

In JP-A-2006-172101, it is assumed that the number of RF tags that are subjected to a read/write operation is one, and the case where plural RF tags simultaneously move is not considered. If the plural RF tags simultaneously move, a size of data that is read/written may be changed depending on each of the RF tags. In some cases, only a read operation needs to be performed in an arbitrary RF tag but both read and write operations need to be performed in another arbitrary RF tag. As a result, the process contents may be different, which cause a difference between process times of the RF tags. In this case, if it is not adjusted to execute a command with respect to an RF tag by an antenna, an antenna may be switched during the command process, which fails to perform the read and write operations.

According to another aspect of the invention, the following problems can be resolved.

In JP-A-2006-172101, the antennas are arranged along the movement direction of the RF tags. However, in the gate or the like, in order to improve a read rate, the antennas may be arranged even in a direction that is different from the movement direction of the RF tags. For example, when products that pass through the gate are stacked high, the antennas may be disposed in a vertical direction, and groups of antennas in a vertical direction may be arranged in a movement direction of the products (movement direction of the RF tags). The antennas may be disposed at both the left and right sides of the gate, not any one of the left and right sides of the gate, and the groups of antennas at both the left and right sides of the gate may be arranged in a movement direction of the products (movement direction of the RF tags). When a read/write operation is performed on the RF tags by the antennas at both the left and right sides of the gate, there are the RF tags where a read/write operation can be performed by the antennas at only one of the left and right sides and the RF tags where a read/write operation can be performed by any of the antennas at the left and right sides. If a read/write operation is not performed by a proper antenna in accordance with the detection situation and the movement of the RF tags, the RF tags that pass without being subjected to a read/write operation may be generated.

In JP-A-2006-172101, the case where it fails to perform the read/write operation on the RF tags is not considered. If the state where it fails to perform the read/write operation on the RF tags is maintained, it hinders the following work. The read/write command may be executed again so as to improve a success rate of the read/write operation on the RF tags.

The invention provides a method and apparatus for controlling an R/W (reader/writer) that performs a read/write operation on RF tags attached to a moving body. Aspects of the invention are as follows. The RF tags that are attached to the moving body are detected using the R/W. A schedule that determines execution timing of a control command of the R/W that performs a data read/write operation on the RF tags in accordance with the detected RF tags is created. The R/W control command is executed with respect to the RF tags using the R/W in accordance with timing that is determined in the created schedule.

According to the invention, since an R/W control command is executed with respect to RF tags in accordance with execution timing that is scheduled according to the detected RF tags, it is possible to decrease a failure that occurs at the time of executing the R/W control command.

The invention may be applied to the case where plural antennas are disposed in a direction that is different from a movement direction of a moving body, and the above effects can be achieved.

### IN THE DRAWINGS

FIG. 1 is a diagram illustrating the configurations of first and second embodiments;
FIG. 2 is a diagram illustrating an example of arrangement information of antennas;
FIG. 3 is a diagram illustrating an example of command indication information;
FIG. 4 is a diagram illustrating an example of command execution performance information;
FIG. 5 is a diagram illustrating an example of RF tag movement information;
FIG. 6 is a flowchart illustrating a process flow of an R/W control program;
FIG. 7 is a flowchart illustrating a process flow of an RF tag detection program;
FIG. 8 a flowchart illustrating a process flow of a schedule creation program according to a first embodiment;
FIG. 9 is a flowchart illustrating a process flow of a command execution program according to a first embodiment;
FIG. 10 is a diagram illustrating an example of RF tag detection information;
FIG. 11 is a diagram illustrating an example of command executable time information;
FIG. 12 is a diagram illustrating an example of execution command information;
FIG. 13 is a diagram illustrating an example of reservation command information;
FIG. 14 is a diagram illustrating a command execution situation;
FIG. 15 is a flowchart illustrating a process flow of a schedule creation program according to second and third embodiments;
FIG. 16 is a flowchart illustrating a process flow of a command execution program according to a second embodiment;
FIG. 17 is a diagram illustrating an example of reservation command information;
FIG. 18 is a diagram illustrating an example of the configurations of an R/W and an antenna according to a third embodiment;
FIG. 19 is a diagram illustrating an example of arrangement information;
FIG. 20 is a diagram illustrating an example of RF tag detection information;
FIG. 21 is a diagram illustrating an example of command executable time information;
FIG. 22 is a diagram illustrating an example of execution command information;
FIG. 23 is a diagram illustrating an example of reservation command information; and
FIG. 24 is a flowchart illustrating a process flow of a command execution program according to a third embodiment.

### First Embodiment

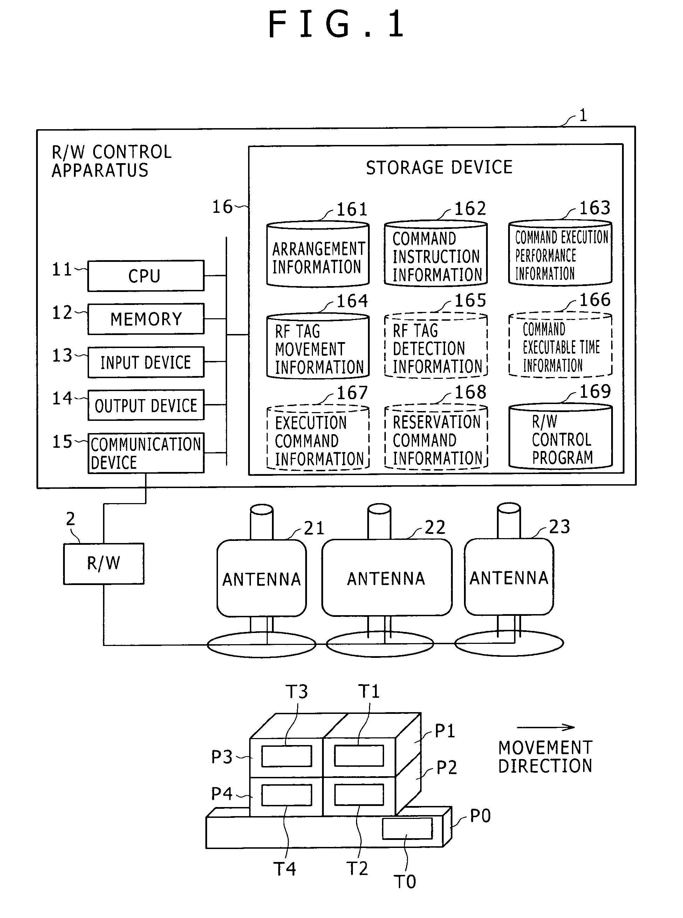

Hereinafter, embodiments of the invention will be described with reference to FIGS. 1 to 14. In a first embodiment, command executed time is reserved and an R/W (reader/writer) is controlled according to reservation information.

FIG. 1 shows the configuration of this embodiment. In the description below, an example where an RFID (Radio Frequency Identification) is applied to a circulation system will be described. In the circulation system where the RFID is applied, an RF tag is attached to a circulated product or a pallet on which the product is loaded. In an incoming product inspection step that is a part of the circulation system, the RF tag is read by the R/W that is disposed at the gate to confirm a passing product or pallet. If necessary, data may be written in the RF tag that is attached to the product or pallet.

An R/W control apparatus 1 controls the R/W 2 to perform a data read/write operation on the RF tag, which is attached to the product or pallet as a moving body that moves by a conveyor. The R/W control apparatus 1 includes a CPU 11, a memory 12 that stores a program or data accompanied when the CPU 11 executes a program, an input device 13 that includes a keyboard or mouse and an interface thereof, an output device 14 that includes a display and an interface thereof, a communication device 15 that includes a communication interface, such as the RS-232C, the USB, or the Ethernet (registered trademark), and a storage device 16, such as a hard disk, which stores data or a program.

The storage device 16 stores arrangement information 161 that indicates the configuration or arrangement of antennas and the R/W 2 controlled by the R/W control apparatus 1, command indication information 162 that is used for an application to request the R/W 2 to execute an operation such as an incoming product inspection, command execution performance information 163 that indicates command process performance in the R/W 2, RF tag movement information 164 that indicates a movement situation of the product or pallet to which the RF tag is attached, RF tag detection information 165 that indicates information of the RF tag detected by the R/W 2, command executable time information 166 that indicates a command executable time for each antenna, execution command information 167 that indicates a list of execution scheduled commands, and reservation command information 168 that indicates a list of commands whose command execution time is reserved. In the description below, the above information and tables that store the above information are not particularly discriminated, but the discrimination between the information and the tables will be easily understood. The storage device 16 stores an R/W control program 169 that is used to control the R/W 2.

Further, data (information) that is surrounded by a solid line is data that is set before a program is executed. Data that is surrounded by a broken line is data that is dynamically created when a program is executed. The R/W 2 connects the antennas 21, 22, and 23. The R/W2 receives a command execution request from the R/W control apparatus 1, and performs a read/write operation on the RF tag while switching an active antenna.

The products P1, P2, P3, and P4 are loaded on the pallet P0. The RF tags T1, T2, T3, and T4 are attached to the products P1, P2, P3, and P4, respectively. The RF tag T0 is attached to the pallet P0. The product or pallet moves in a direction according to the order of the antennas '21 → 22 → 23'.

Although not shown in the drawings, in order to detect when the product or pallet becomes closer or the moving speed thereof, the R/W control apparatus 1 may be connected to a sensor or a camera and an image recognition device, so as to cooperate with each other. The R/W control apparatus 1 receives movement information of the product or pallet from the image recognition device, such as the sensor or the camera. The handling process of the movement information that the R/W control apparatus 1 has received will be described below.

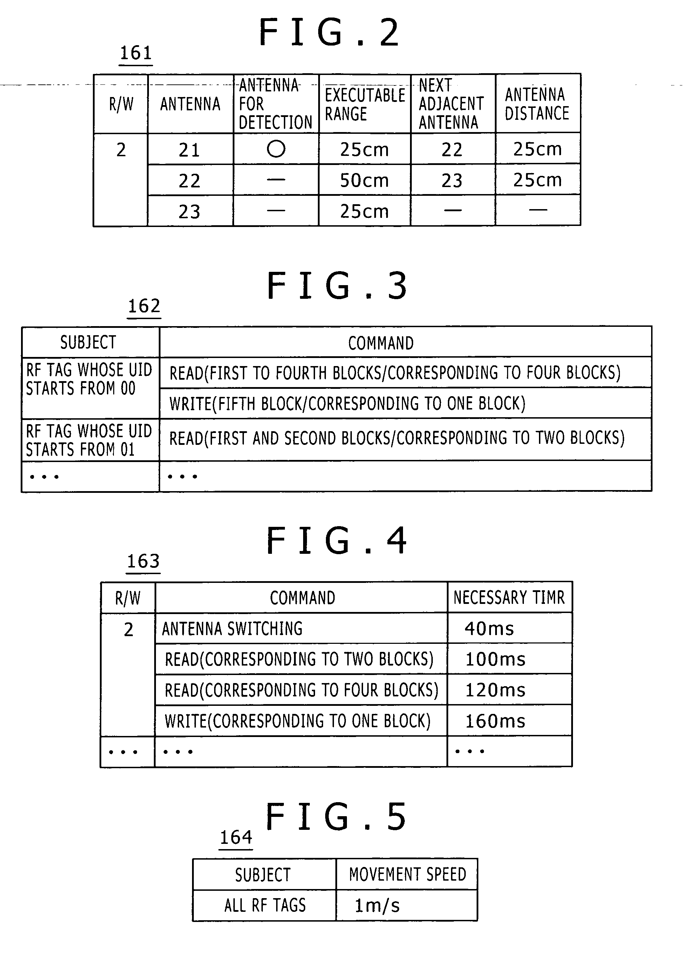

FIG. 2 shows the arrangement information 161 that indicates the configuration or arrangement of the antenna or the R/W 2 controlled by the R/W control apparatus 1. The arrangement information 161 includes information that indicates which one of the antennas 21, 22, and 23 that are connected to the R/W 2 connected to the R/W control apparatus 1 is used for executing an inventory command and detecting the RF tag, and information that indicates a range where a read command or a write command can be executed with respect to the RF tag by the antennas, the antennas that are adjacent to a movement direction of the product or the pallet, and a distance between the antennas.

The RF tag in the 'executable range' is called an RF tag in a command executable state. Further, the distance between the antennas does not mean a distance between the centers of the antennas but means a distance between an executable range of an arbitrary antenna and an executable range of an adjacent antenna, that is, a distance at which the RF tag cannot perform communication with all of the antennas.

In FIG. 2, the R/W 2 is connected to the R/W control apparatus 1, and the antennas 21, 22, and 23 are connected to the R/W 2. Since the antenna 21 is an antenna that is used to execute the inventory command and detect the RF tag, the antenna 21 is denoted by a symbol 'O' The inventory command is a command that is used to obtain a UID (Unique Identifier) of the RF tag in an executable range of an arbitrary antenna. If plural RF tags exist in the executable range, plural UIDs are obtained by executing the inventory command once.

A command executable range of the antenna 21 is 25 cm. The R/W 2 performs a read/write operation on the RF tag while passing through a distance of 25 cm near the antenna toward the movement direction of the RF tag. The next adjacent antenna of the antenna 21 is the antenna 22, and a distance between the antenna 21 and the antenna 22 is 25 cm.

FIG. 3 shows command indication information 162 that is used to indicate what an application requests the R/W 2 to execute. The command indication information 162 includes information on a command that is executed with respect to the RF tag for each condition. In FIG. 3, as an example of the condition, when a UID of the RF tag starts from 00, there is command indication information indicating that a read command is executed, four blocks of the first to fourth blocks of user data of the RF tag are read, and data is written in one block of a fifth block of the user data of the RF tag. In this example, it is assumed that the UID starts from 00 in the RF tag for the pallet, detailed information of the pallet is stored in the first to fourth blocks of the user data, and the detailed information is read by the R/W 2 and information indicating the passage is written in the fifth block.

When the UID of the RF tag starts from 01, there is command indication information indicating that a read command is executed and two blocks of the first and second blocks of the user data of the RF tag are read. In this example, it is assumed that the UID starts from 01 in the RF tag for a product and detailed information of the product is stored in the first and second blocks of the user data. Although not shown in the drawings, the priority of the commands from the application may be set for each of contents of the command indication information. The priority is used in a schedule creation program, which will be described below.

When a UID starts from 00 or 01, it indicates that the UID is 00 or 01 from the head.

FIG. 4 shows the command execution performance information 163 that indicates command process performance (process time) by the R/W. The command execution performance information 163 stores time needed to perform a command, for each command and contents thereof. In the read command, needed time is different according to the number of read blocks. In this case, [read + the number of blocks] is handled as one command. In regards to the other commands, when needed time is different according to a parameter such as the number of blocks, a corresponding command is handled as a different command. In FIG. 4, in the command execution performance information, when the R/W 2 is used, time of 40 ms is needed to execute an antenna switching command, time of 100 ms is needed to executed a read command for two blocks, time of 120 ms is needed to execute a read command for four blocks, and time of 160 ms is needed to execute a write command for one block. Actually, since the time that is needed to execute a command is different depending on a situation, maximum execution time that has been obtained by plural measurements is preferably adopted in consideration of the difference.

FIG. 5 shows the RF tag movement information 164 that indicates a movement situation of the product or the pallet to which the RF tag is attached. In the RF tag movement information 164, a constant value is set when it is recognized that the product moves at a regular speed by the belt conveyor. When movement speed of the product varies by a person that carries the product at the gate, a sensor may be disposed in front of the gate in order that the RF tag movement information 164 is updated while the movement speed of the product is measured by the sensor. In FIG. 5, the movement speed of the RF tag is set to 1 m/s.

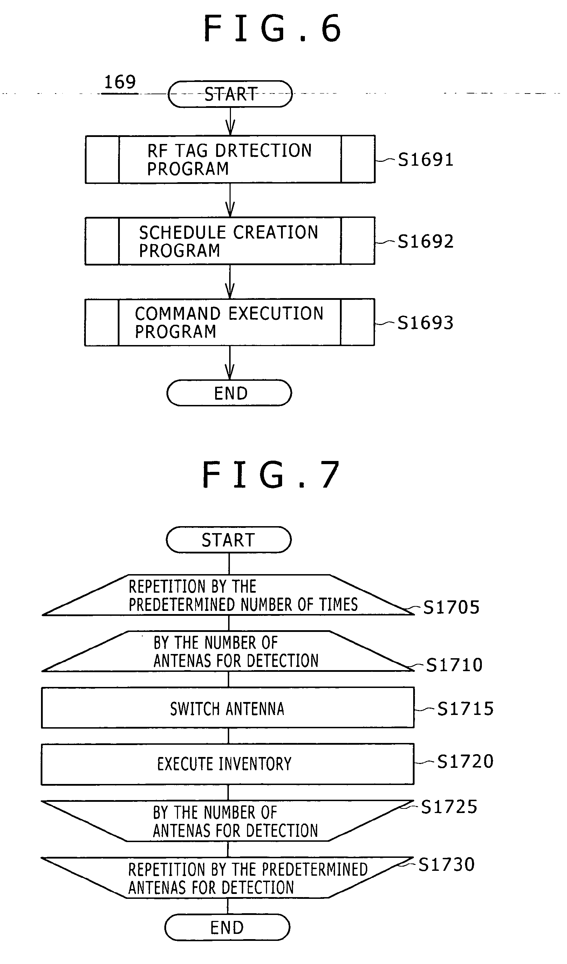

FIG. 6 is a flowchart illustrating a process flow of the R/W control program 169. The R/W control program 169 starts according to a start request from the application or when the sensor or camera and the image recognition device detects that the RF tag is approximately within the RF tag detection range.

The R/W control program 169 starts the RF tag detection program (S1691). If the RF tag detection program is executed, the RF tag detection information 165 that indicates a list of RF tags is obtained. An operation example of the RF tag detection program will be described below.

The R/W control program 169 starts a schedule creation program (S1692). The schedule creation program creates the reservation command information 168 on the basis of the RF tag detection information 165. An operation example of the schedule creation program will be described below.

The R/W control program 169 executes a command execution program (S1693). The command execution program executes a reserved command on the basis of the reservation command information 168. An operation example of the command execution program will be described below.

FIG. 7 is a flowchart illustrating a process flow of an RF tag detection program. The RF tag detection program starts by the R/W control program 169, uses an inventory command to detect the RF tag, and creates the RF tag detection information 165. The RF tag detection program is executed such that the sensor or the camera and the image recognition device detects timing at which the RF tag enters in an RF tag detection range and the inventory command for detecting the RF tag is issued at the detected timing. The RF tag detection program may start according to a request from the application and a loop on the flowchart may be continuously executed until the RF tag is detected.

The RF tag detection program executes the following processes (S1710 to S1725) by the predetermined number of times (S1705 and S1730). The inventory command is executed while the antenna for RF tag detection (for example, defined by the arrangement information 161) is switched, thereby detecting the RF tag. In the arrangement information 161 shown in FIG. 2, since the antenna 21 is designated as the antenna for RF tag detection, the following steps (S1710 and S1725) are executed with respect to the antenna 21.

The RF tag detection program executes an antenna switching command such that the antenna 21 becomes active (S1715). The RF tag detection program executes the inventory command to detect the RF tag (S1720). Information of the detected RF tag is stored as the RF tag detection information 165.

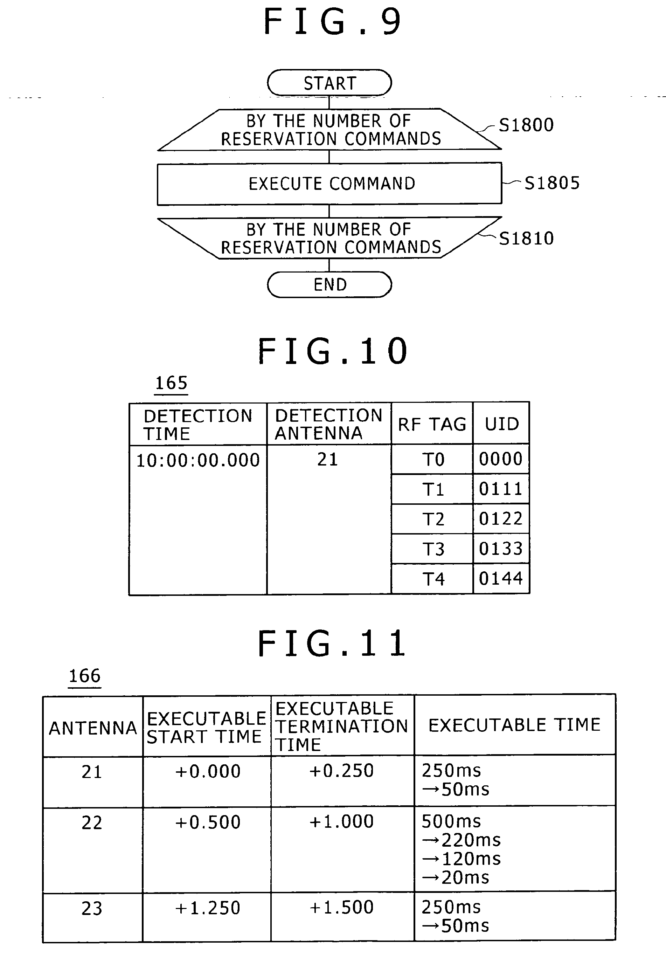

FIG. 10 shows the RF tag detection information 165. The RF tag detection information 165 includes information on detection time indicating time when the inventory command that has detected the RF tag is executed, information on a number of an antenna that has detected the RF tag, and information on a UID of the detected RF tag. The RF tag detection information 165 shown in FIG. 10 indicates that five RF tags T0, T1, T2, T3, and T4 have been detected by the antenna 21 at 10:00:00.000. The UIDs of the detected RF tags T0, T1, T2, T3, and T4 become 0000, 0111, 0122, 0133, and 0144, respectively.

In the above description, the antenna switching command and the inventory command are executed by the predetermined number of times. The predetermined number of times includes the number of times that is needed to detect all moving RF tags. For example, when it can be known from a previous operation test that all of the moving RF tags can be detected by repeating the process three times, the number of numbers is set to three times, and the process is repeated three times when the RF tag detection program is executed. In addition to the method using the predetermined number of times, a method may be used in which the process may be repeated until a new RF tag is not detected.

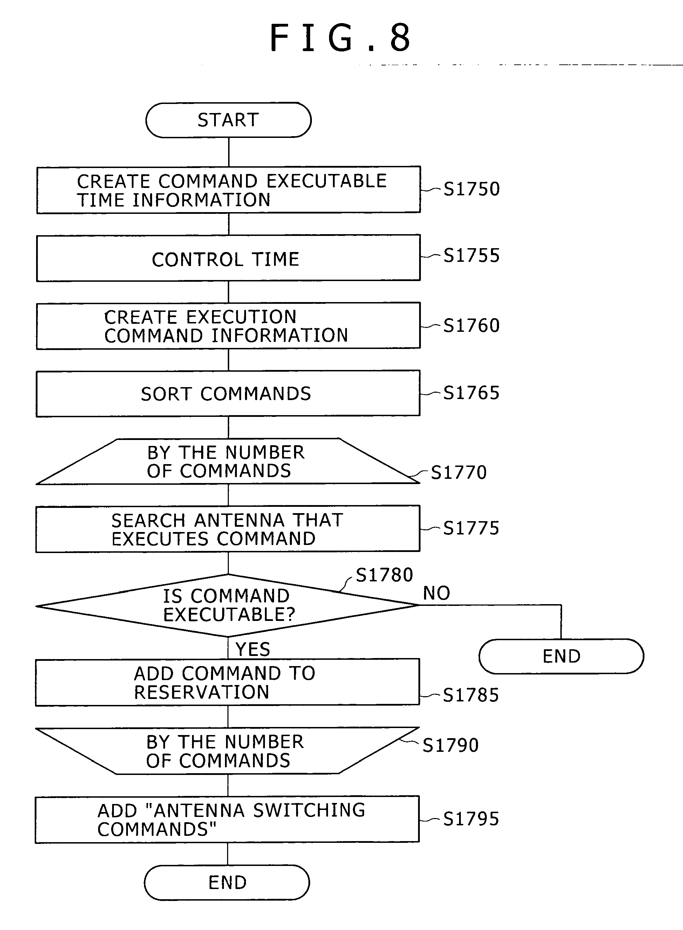

FIG. 8 is a flowchart illustrating a process flow of a schedule creation program. The schedule creation program starts after executing the RF tag detection program by the R/W control program 169, and creates reservation command information 168 using the RF tag detection information 165.

The schedule creation program creates command executable time information 166 on the basis of the arrangement information 161 and the RF tag movement information 164 (S1750). FIG. 11 shows command executable time information 166 for each antenna. The 'command executable time' means time when the RF tag is within the command executable range of the antenna. The command executable time information 166 includes a start time, a termination time, and an executable time, which indicate the command executable time for each antenna. The command executable range of the antenna 21 is 25 cm from the arrangement information 161 of FIG. 2 and a moving speed of the RF tag is 1 m/s from the RF tag movement information 164 of FIG. 5. Thus, an executable time of the antenna 21 becomes 250 ms. This is applicable to the other antennas, similar to the antenna 21.

The start time and the termination time are set as follows. Since the antenna 21 is an antenna for detection, a command executable start time as a relative time with a detection time of the antenna 21 is set as + 0.000 second, and + 0.250 second obtained by adding 250 ms that is the executable time of the antenna 21 is set as a termination time. Since it can be seen from the arrangement information 161 of FIG. 2 that the RF tag passes through a peripheral portion of the antenna 22 after the antenna 21 and a distance between the antennas 21 and 22 is 25 cm, 250 ms after the command executable termination time of the antenna 21 becomes a command executable start time. Accordingly, + 0.500 second is set as the command executable start time of the antenna 22. The command executable termination time of the antenna 22 is set as + 1.000 second because the command executable time of the antenna 22 is 500 ms. This is applicable to the other antennas.

When the movement speed of the RF tag at the belt conveyor is determined in advance, the previously created command executable time information 166 may be used without executing Step S1750.

The schedule creation program adjusts the command executable time information 166 in accordance with a termination reservation time of the present program (S1755). Since the RF tag moves while the RF tag detection program and the schedule creation program are executed, this needs to be reflected on the command executable time. If the time when the RF tag has been detected is set as 10:00:00.000 and a termination anticipation time of the schedule creation program is set as 10:00:00.200 on the basis of the RF tag detection information 165, the command executable start time of the antenna 21 in the command executable time information 166 is at 10:00:00.000 (= 10:00:00.000 + 0.000) and the command executable termination time is at 10:00:00.250 (= 10:00:00.000 + 0.250). Thus, it can be understood that the RF tag exists at a place of the antenna 21 when the schedule creation program is terminated. Accordingly, the command executable time of the antenna 21 is set as 250 ms - 200 ms = 50 ms, which is obtained by calculating subtraction between a termination reservation time of the schedule creation program and the command executable termination time of the antenna 21.

The schedule creation program creates execution command information 167 on the basis of the command indication information 162, the command execution performance information 163, and the RF tag detection information 165 (S1760).

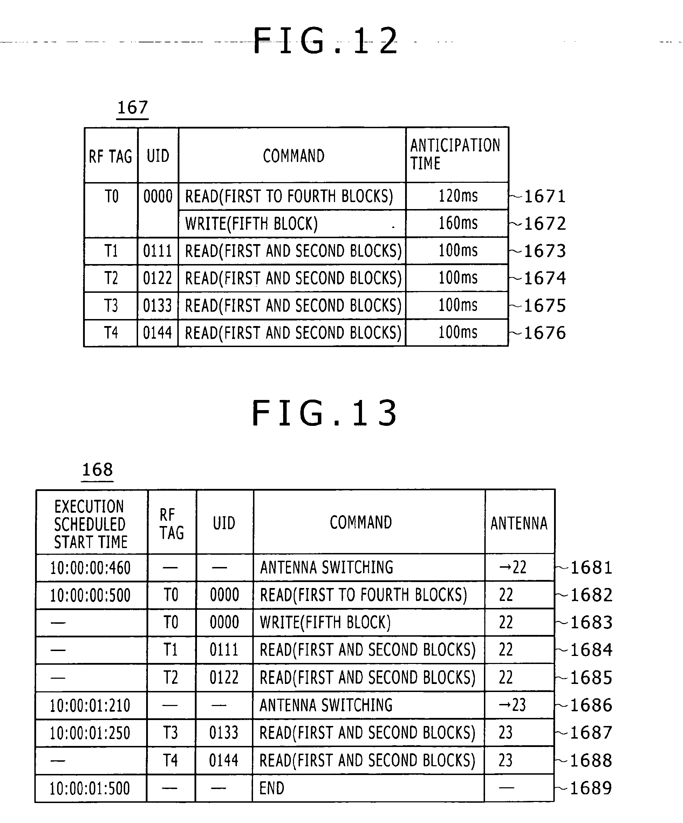

FIG. 12 shows execution command information 167. The execution command information 167 is obtained by calculating time necessary for executing each command by referring to the command indication information 162 and the command execution performance information 164 with respect to each RF tag included in the RF tag detection information 165. In the RF tag detection information 165 of FIG. 10, it can be understood that the RF tags T0, T1, T2, T3, and T4 are detected. In the RF tag T0, since a UID is '0000' and starts from '00', read (first to fourth blocks/corresponding to four blocks) and write (fifth bocks/corresponding to one block) are obtained from the command indication information 162 of FIG. 3, and commands 1671 and 1672 are added to the execution command information 167. In the command execution performance information 163 of FIG. 4, the time that is needed to read four blocks is 120 ms and the time that is needed to write one block is 160 ms, and thus a reservation time is set to each of the commands 1671 and 1672. In each of the RF tags T1 to T4, since a UID starts from '01', read (first and second blocks/corresponding to two blocks) is obtained from the command indication information 162 of FIG. 3, and commands 1673 to 1676 are added to the execution command information 167. Since the time that is needed to read two blocks is 100 ms in the command execution performance information 163 of FIG. 4, the reservation time is set to each of the commands 1673 to 1676.

The schedule creation program sorts commands that are included in the execution command information 167 (S1765). The sort reference (condition) is as follows: (1) setting commands where a total sum of reservation times for every RF tag is large to a high level, and (2) setting commands where a degree of demand of command indication is high (for example, defined by the command indication information 162) to a high level. In this case, the process with respect to the same RF tag is continuously executed, and the commands are sorted using the sort reference of (1). The total sum of anticipation times of commands with respect to the RF tag T0 is 120 ms + 160 ms = 280 ms, and is larger than 100 ms that is an anticipation time for each command with respect to the other RF tags T1 to T4. The commands are sorted such that the RF tag T0 is at a high level.

The schedule creation program executes the following steps S1775 to S1785 by the number of commands that are included in the execution command information 167 (S1770 and S1790). First, the commands 1671 and 1672 with respect to the same RF tag are selected and Steps S1775 to S1785 are executed.

The schedule creation program searches an antenna that can execute a command (S1775). The commands 1671 and 1672 are commands that are executed with respect to the RF tag T0, and a total sum of command execution anticipation times is 280 ms. If referring to the command executable time information 166 of FIG. 11, an antenna where the command executable time becomes 280 ms or more is only the antenna 22.

The schedule creation program investigates whether there is an antenna that can execute a command (S1780). When there is no antenna that can execute a command, the program is terminated. In addition to the termination of the program, a warning or a message that requires stop or deceleration may be output to a person who is in charge of a belt conveyor or a pallet. Then, the schedule creation program may be executed again at a low speed.

The schedule creation program adds a command to the reservation command information 168 (S1785). FIG. 13 shows reservation command information 168. In the reservation command information 168, a command execution time (execution timing and execution scheduled start time) and command execution contents (a command name, a target RF tag, and an antenna used) are included. The commands 1671 and 1672 are added as commands 1682 and 1683 of the reservation command information 168 of FIG. 13. In order to correspond to the reservation of the commands 1682 and 1683, time that is needed to execute the commands is included in the command executable time information 166. Since the total sum of the reservation times of the commands 1682 and 1683 is 280 ms, the command executable time of the antenna 22 in the command executable time information 166 of FIG. 11 is set as 500 ms - 280 ms = 220 ms.

Next, the command 1673 is selected from the execution command information 167 of FIG. 12, and Steps S1775 to S1785 are executed. The schedule creation program searches an antenna that can execute the command 1673 (S1775). Since the reservation time of the command 1673 is 100 ms, if referring to the command executable time information 166 of FIG. 11, it is possible to execute the corresponding command by both the antenna 22 and the antenna 23 (S1780).

The schedule creation program selects the antenna 22 that is adjacent to the antenna 21 and registers the command 1673 as the command 1684 in the reservation command information 168 of FIG. 13 (S1785). Further, the execution time of the command 1684 is included in the command executable time information 166 of FIG. 11 and the command executable time of the antenna 22 is set as 220 ms - 100 ms = 120 ms.

In the same method, Steps S1775 to S1785 are executed with respect to the commands 1674, 1675, and 1676 of the execution command information 167 of FIG. 12, and the commands 1685, 1687, and 1688 are added to the reservation command information 168 of FIG. 13. The execution time of each of the commands 1685, 1687, and 1688 is included in the command executable time information 166 of FIG. 11, and the command executable time of the antenna 22 is set as 120 ms - 100 ms = 20 ms and the command executable time of the antenna 23 is set to 250 ms - 100 ms - 100 ms = 50 ms.

The schedule creation program adds an antenna switching command to the reservation command information 168 (S1795). In addition to the read/write operation on the RF tags T0 to T4, the antenna switching operation needs to be performed from the antenna 21 to the antenna 22 and from the antenna 22 to the antenna 23. In order that the command execution starts at the start time of the command executable time information 166 of FIG. 11 for each antenna, the command execution scheduled start time is set. For example, the command execution start time of the antenna 22 is at 10:00:00.500 (= 10:00:00.000 + 0.500) and thus the command execution scheduled start time of the command 1682 is set to 10:00:00.500. The antenna switching command is inserted immediately before the command 1682, such that the antenna is switched into the antenna 22 when the command 1682 starts to be executed. Since the time that is needed to execute the antenna switching command is 40 ms, the command 1681 is added to the reservation command information 168 of FIG. 13 in order to start the antenna switching command at 10:00:00.460 before 40 ms. The antenna switching operation from the antenna 22 to the antenna 23 is also executed by the same method, and the command 1686 is added.

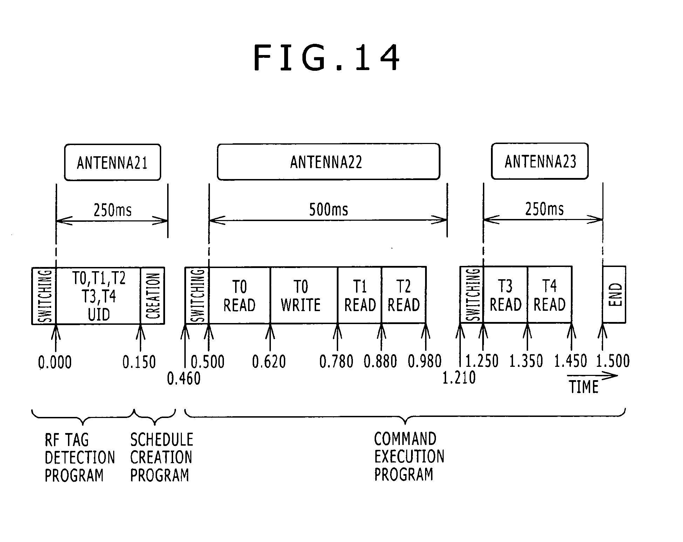

FIG. 9 is a flowchart illustrating a process flow of a command execution program. The command execution program starts after executing the schedule creation program by the R/W control program 169 and controls the R/W 2 on the basis of the reservation command information 168. The operation of the command execution program will be described with reference to FIGS. 9 and 14.

A current point of time is set as a point of time when the RF tag is detected using the RF tag detection program, the reservation command information 168 is created using the schedule creation program, and the detected RF tag enters in a command executable range of the antenna 22 (immediately before the time 0.460 of FIG. 14).

The command execution program extracts commands from the reservation command information 168 one by one and sequentially executes the extracted commands. First, the command 1681 that has the high priority temporally is selected.

The command execution program is in a waiting state until the command execution scheduled start time (time 0.460 of FIG. 14), and executes the command after the corresponding time (S1805). Since the current time is earlier than the execution scheduled start time 10:00:00.460 of the command 1681, the command execution program is in a waiting state until 10:00:00.460 and starts the execution of the antenna switching command such that the antenna 22 becomes active at 10:00:00.460.

Hereinafter, the command execution program executes the commands 1682 to 1689 in the reservation command information 168 of FIG. 13 in the same method as the above-described method (S1800 to S1810). When the time is not designated as the execution scheduled start time of the reservation command information 168, the command execution program stats to execute the command immediately after the previous command execution is terminated.

As described above, according to the first embodiment, an execution schedule of the commands to be executed is created and each command is executed on the basis of a sequence of the created schedule, and thus it is allowed that a response from the R/W is delayed for a short time. In particular, when the number of commands that are scheduled at one time is small, the schedule creation time is shortened, which is advantageous to the allowance of the short-time response delay.

### Second Embodiment

Hereinafter, a second embodiment will be described with reference to FIGS. 1 to 7, 10 to 12, and 14 to 17. In the second embodiment, if necessary, a command execution time is reserved, the R/W is controlled according to the reservation information, and controlled such that a non-reserved command is executed in time when a reservation is not made.

The configuration that is shown in FIGS. 1 to 7 and 10 to 12 is the same as the configuration of the first embodiment, and thus only a necessary portion will be described in order to avoid the repetitive description.

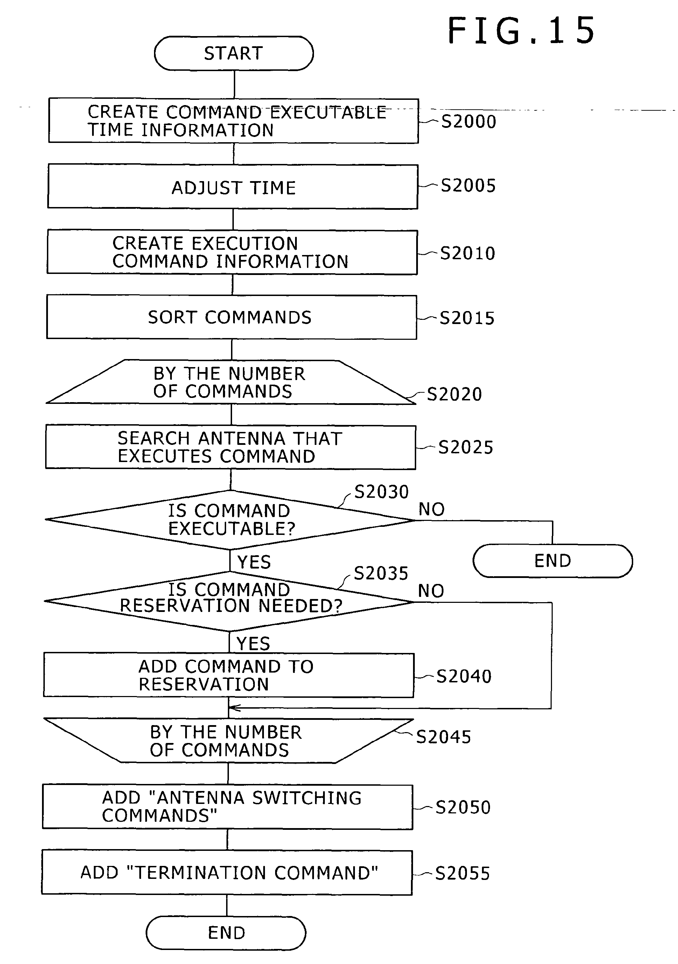

In the second embodiment, the processes of the command execution program and the schedule creation program that starts by the R/W control program 169 of FIG. 6 described in the first embodiment are different from those of the first embodiment. The schedule creation program creates the command executable time information 166, the execution command information 167, and the reservation command information 168 on the basis of the RF tag detection information 165 shown in FIG. 10. The command execution program executes the reserved command on the basis of the command executable time information 166, the execution command information 167, and the reservation command information 168 and executes a non-reserved command in an available time in which a command is not reserved. FIG. 15 is a flowchart illustrating a process flow of a schedule creation program according to this embodiment. The schedule creation program starts after executing the RF tag detection program by the R/W control program 169 (S1692 of FIG. 6), and creates the reservation command information 168 using the RF tag detection information 165.

Since Steps S2000 to S2015 of the schedule creation program of FIG. 15 are the same as those of the first embodiment (Steps S1750 to S1765 of FIG. 8), the repetitive description will be omitted. As the result that is obtained by executing Steps S2000 to S2015, the command executable time information 166 of FIG. 11 and the execution command information 167 of FIG. 12 perform the same functions as described in the first embodiment.

The schedule creation program executes the following Steps S2025 to S2040 by the number of commands that are included in the execution command information 167 (S2020 and S2045). First, the commands 1671 and 1672 with respect to the same RF tag of FIG. 12 are selected from the execution command information 167, and Steps S2025 to S2040 are executed.

The schedule creation program searches an antenna that can execute a command (S2025). The commands 1671 and 1672 are commands that are executed with respect to the RF tag T0, and a total sum of command execution anticipation times is 280 ms. If referring to the command executable time information 166 of FIG. 11, the antenna where the command executable time is 280 ms or more is only the antenna 22.

The schedule creation program investigates whether there is an antenna that can execute a command (S2030). When there is no antenna that can execute a command, the process is terminated. In addition to the termination of the process, a warning may be output to a control device of a belt conveyor to stop the belt conveyor or delay the movement speed thereof, and the schedule creation program may be executed again at a low speed.

The schedule creation program determines whether a command needs to be added to the reservation command information 168 on the basis of a predetermined determination reference (condition) (S2035). The determination reference (condition) includes (1) a command that can be executed by only one antenna and (2) a command that has a degree of demand of command indication more than a predetermined value (for example, defined by command indication information 162). In this embodiment, the determination reference of (1) is adopted. Since the commands 1671 and 1672 can be executed by only the antenna 22, a reservation is needed.

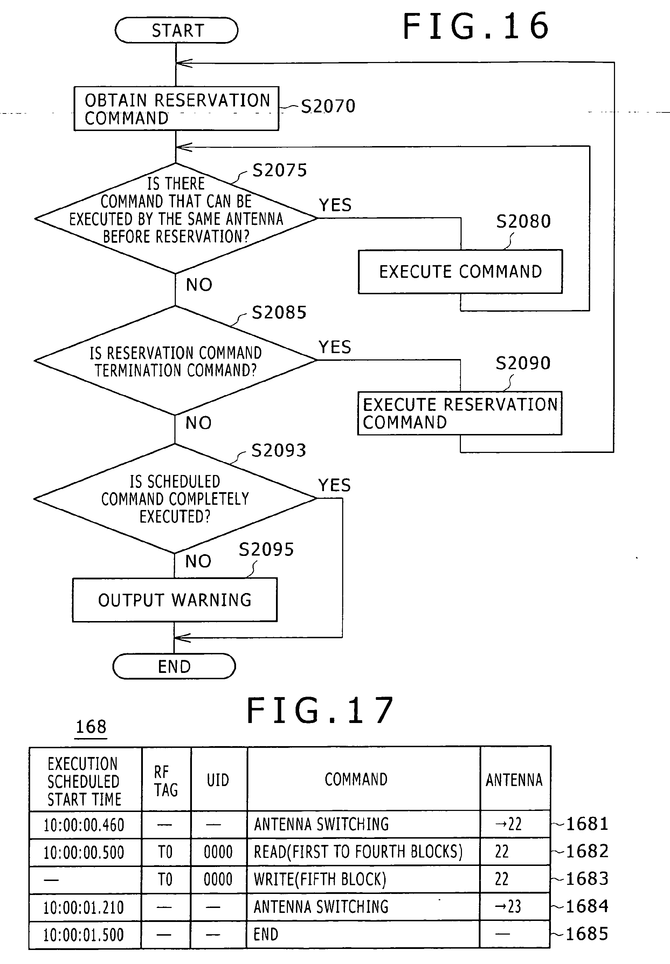

The schedule creation program adds a command to the reservation command information 168 (S2040). FIG. 17 is a diagram illustrating reservation command information 168. The commands 1671 and 1672 are added as the reservation command information 1682 and 1683 of FIG. 17. Since the commands 1682 and 1683 have been reserved, the time needed to execute the commands is included in the command executable time information 166. Since a total sum of reservation times of the commands 1682 and 1683 is 280 ms, the command executable time of the antenna 22 in the command executable time information 166 of FIG. 11 is set as 500 ms - 280 ms = 220 ms.

Next, the command 1673 is selected from the execution command information 167 and Steps S2025 to S2040 are executed.

The schedule creation program searches an antenna that can execute the command 1673 (S2025). Since the anticipation time of the command 1673 is 100 ms, if referring to the command executable time information 166 of FIG. 11, it can be understood that the command can be executed by the antennas 22 and 23 (S2030).

Since the command 1673 can be executed by plural antennas 22 and 23, the schedule creation program does not need to make a reservation on the basis of the above-described determination reference (S2035).

In the same method, if Steps S2025 to S2040 are executed with respect to the commands 1674, 1675, and 1676, it is assumed that there is no command that does not need to be reserved. Accordingly, only the commands 1682 and 1683 are included in the reservation command information 168 of FIG. 17.

The schedule creation program adds an antenna switching command to the reservation command information 168 (S2050). In addition to the read/write operation on the RF tags T0 to T4, the antenna switching operation needs to be performed from the antenna 21 to the antenna 22 and from the antenna 22 to the antenna 23. First, the execution scheduled start time of the antenna switching command is set such that the command execution starts at the start time of the command executable time information 166 of FIG. 17 for each antenna. For example, the command executable start time of the antenna 22 in the executable time information 166 is 10:00:00.500 (= 10:00:00.000 + 0.500), and thus the command execution scheduled start time of the command 1682 is set to 10:00:00.500. The antenna switching command is inserted immediately before the command 1682, such that the antenna is switched from the antenna 21 to the antenna 22 when the command 1682 starts to be executed. Since the anticipation time of the antenna switching command is 40 ms, the command 1681 is added to the reservation command information 168 of FIG. 17, such that the antenna switching command starts at 10:00:00.460 before 40 ms. The switching operation from the antenna 22 to the antenna 23 is executed in the same method and the command 1684 is added.

The schedule creation program adds a command indicating termination to the reservation command information 168, such that the command execution program is terminated when the RF tag is beyond a command executable range of the final antenna (S2050). Since the antenna 23 is the final antenna, the command 1685 is added to the reservation command information 168 of FIG. 17, such that the corresponding program is terminated at 10:00:01.500 that is the command executable termination time of the antenna 23.

FIG. 16 is a flowchart illustrating a process flow of a command execution program. The command execution program starts after executing the schedule creation program by the R/W control program 169 (S1693 of FIG. 6) and controls the R/W on the basis of the reservation command information 168. Further, the command execution program controls the R/W such that a non-reserved command is executed at the time when there is no command execution reservation. The operation of the command execution program will be described with reference to FIG. 14.

In the current situation, in FIG. 14, the RF tag is detected using the RF tag detection program, the reservation command information 168 is created using the schedule creation program, and the detected RF tag is within a command executable range of the antenna 22.

The command execution program obtains a command 1681, which is not executed and is at the head, from the reservation command information 168 of FIG. 17 (S2070).

The command execution program investigates whether there is a command that can be executed by a current active antenna, before executing the command obtained in Step S2070 (S2075). The command execution program searches a command that can be executed by the current active antenna 21 before executing the command 1681. If the current time is set to 10:00:00.200 of FIG. 14, the start time of the command 1681 is 10:00:00.460 from the reservation command information 168 of FIG. 17, but the command executable termination time of the antenna 21 is 10:00:00.250 from the command executable time information 166 of FIG. 11. Therefore, the command executable time by the antenna 21 becomes 250 ms - 200 ms = 50 ms. If a command that is not reserved but can be executed is searched from the execution command information 167 of FIG. 12, this command does not exist, and thus the process proceeds to Step S2085.

The command execution program determines whether the command obtained in Step S2070 is a termination command (S2085). Since the command 1681 is not a termination command, the process proceeds to Step S2090.

The command execution program is in a waiting state until a set time and then executes the selected command (S2090). Therefore, the command execution program is in a waiting state until 10:00:00.460, and executes an antenna switching command 1681 for switching the antenna into the antenna 22. It is assumed that the time of 40 ms is needed to execute the antenna switching command, and the time becomes 10:00:00.500.

The command execution program obtains a command 1682 from the reservation command information 168 of FIG. 17 (S2070). The command execution program investigates a command that can be executed by the current active antenna 22 before executing the command 1682 (S2075). Since the current time is at 10:00:00.500 and the start time of the command 1682 is at 10:00:00.500, the command executable time by the antenna 22 becomes 0 ms. Since this command does not exist, the process proceeds to Step S2085. The command execution program proceeds to Step S2090 because the command 1682 is not the termination command (S2085).

Since the current time is at 10:00:00.500, the command execution program immediately executes the command 1682 (S2090). It is assumed that the time of 120 ms is needed to execute the corresponding command, as shown in the execution command information 167 of FIG. 12, and the time becomes 10:00:00.620.

The command execution program obtains the command 1683 from the reservation command information 168 of FIG. 17 (S2070), and investigates a command that can be executed by the current active antenna 22 before executing the command 1683 (S2075). Since the execution scheduled start time is not set, the command 1683 is a command that is executed immediately after executing the previous command 1682. Accordingly, since there is no command that can be executed before executing the command 1683, the process proceeds to S2085. Since the command 1683 is not a termination command, the process proceeds to Step S2090 (2085), and the command execution program immediately executes the command 1683 (S2090). It is assumed that the time of 160 ms is needed to execute the corresponding command, as shown in the execution command information 167 of FIG. 12, and the time becomes 10:00:00.780.

The command execution program obtains a command 1684 from the reservation command information 168 shown in FIG. 17 (S2070), and investigates a command that can be executed by the current active antenna 22 before executing the command 1684 (S2075). Since the current time is at 10:00:00.780, the start time of the command 1684 is at 10:00:01.210, and the command executable termination time of the antenna 22 is at 10:00:01.000 from the command executable time information 166 of FIG. 11, the command executable time by the antenna 22 becomes 1000 ms - 750 ms = 250 ms. If a command that is not reserved but can be executed is searched from the execution command information 167 of FIG. 12, the commands 1673, 1674, 1675, and 1676 are discovered. Accordingly, the command 1673 at an uppermost level is selected.

The command execution program executes the command 1673 (S2080). It is assumed that the time of 100 ms is needed to execute the corresponding command, as shown in the execution command information 167 of FIG. 12, and the time becomes 10:00:00.880.

In the same method as the above method, Steps S2070 to S2080 are executed and the command 1674 is executed. It is assumed that the time of 100 ms is needed to execute the corresponding command, as shown in the execution command information 167 of FIG. 12, and the time becomes 10:00:00.980.

The command execution program investigates a command that can be executed by the current active antenna 22 before executing the command 1684 (S2075). Since the current time is at 10:00:00.980, the start time of the command 1684 is at 10:00:01.210, and the command executable termination time of the antenna 22 is at 10:00:01.000 from the command executable time information 166 shown in FIG. 11, the command executable time by the antenna 22 becomes 1000 ms - 980 ms = 70 ms. If a command that is not reserved but can be executed is searched from the execution command information 167 shown in FIG. 12, this command does not exist and thus the process proceeds to Step S2085. Since the command 1684 is not a termination command, the command execution program proceeds to Step S2090 (S2085).

The command execution program is in a waiting state until the time 10:00:01.210 and then executes the antenna switching command 1684 for switching the antenna into the antenna 23 (S2090). It is assumed that the time of 40 ms is needed to execute the corresponding command, and the time becomes 10:00:01.250.

Hereinafter, Steps S2070 to 2080 are repeatedly executed, and the commands 1675 and 1676 are executed. As a result, it is assumed that the time becomes 10:00:01.450.

The command execution program obtains a command 1685 from the reservation command information 168 shown in FIG. 17 (S2090). The command execution program investigates a command that can be executed by the current active antenna 23 before executing the command 1685 (S2075). Since all of the commands of the execution command information 167 shown in FIG. 12 have been executed, there is no command that can be executed, and thus the process proceeds to Step S2085. The command 1685 is a termination command (S2085). The command execution program checks whether there is a non-executed command in the reservation command information 168 of FIG. 17 and the execution command information 167 of FIG. 12 (S2093). In the above-described example, all of the commands of the execution command information 167 shown in FIG. 12 have been executed. When there is a non-executed command, a warning that is used to indicate which command is not executed with respect to which RF tag (UID) is output (S2195), and the process is terminated.

As described above, according to the second embodiment, since the command execution schedule is created under a predetermined determination reference, there is an advantage in that the schedule creation time is short. This advantage is particularly remarkable in the case where the number of commands is large. During the command execution and for command execution waiting time, in consideration of the current time, the execution sequence of commands that is suitable for the command execution situation and the current time is dynamically determined. Thus, if all of the commands can be executed, a response delay from the R/W can be allowed within a range in which the RF tag can communicate with the antenna. In particular, when the number of commands that are scheduled at one time is small, the schedule creation time is shortened, which is advantageous to the allowance of the short-time response delay.

### Third Embodiment

Hereinafter, a third embodiment will be described with reference to FIGS. 3 to 6, 15, and 18 to 24. The third embodiment corresponds to the case where antennas are disposed parallel to a direction that is different from a movement direction of the RF tag.

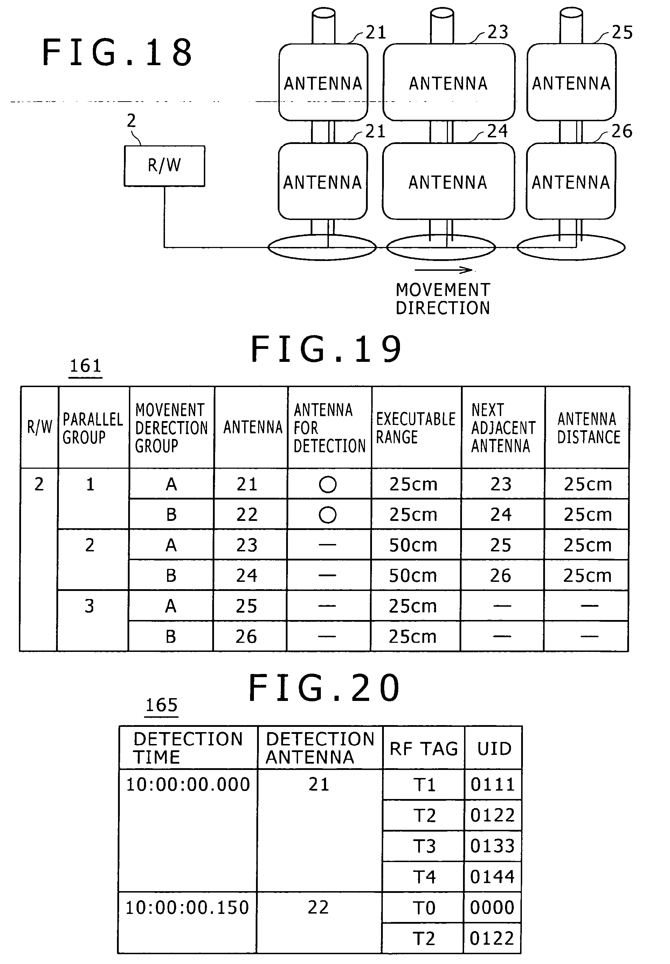

FIG. 18 shows a portion where the arrangement and the number of antennas that are connected to the R/W 2 of FIG. 1 in the first embodiment are changed. The R/W 2 connects the antennas 21, 22, 23, 24, 25, and 26. The R/W 2 receives a command execution request from the R/W control apparatus 1 and performs a read/write operation on the RF tag while switching the active antenna.

Similar to the first embodiment, the product and the pallet passes through the front portion (peripheral portion) of the antenna that is connected to the R/W 2. In regards to the antennas, a group of antennas 21 and 22, a group of antennas 23 and 24, and a group of antennas 25 and 26 are arranged in a vertical direction. The product or pallet moves in a direction according to the order of antennas 21 → 23 → 25 and antennas 22 → 24 → 26. When the variation is generated in a height-wise direction of the attachment location of the RF tag to the product or the pallet, plural antennas may be disposed in parallel to a movement direction of the RF tags, in order to widen a range of a height-wise direction in which the RF tags can be read. Further, when the product and the pallet pass through the gate, the antennas may be disposed parallel to each other (opposite to each other) at the left and right sides of the gate.

FIG. 19 is a diagram illustrating arrangement information 161 that indicates the configuration and arrangement of antennas or an R/W 2 controlled by an R/W control apparatus 1. The arrangement information 161 of FIG. 19 indicates the configuration and arrangement of FIG. 18. The antennas 21 to 26 are connected to the R/W 2. The antennas 21 and 22 are antennas that are used to execute an inventory command and detect the RF tag, and are denoted by a symbol 'O'.

Each of the group of antennas 21 and 22, the group of antennas 23 and 24, and the group of antennas 25 and 26 are arranged in a direction that is different from the movement direction of the RF tag, and when the RF tag moves, the antennas of each group are used in parallel (at the time of actually using the antennas, any one of the groups of antennas is activate and used). When the RF tag exists in front of the group of antennas 21 and 22, the antennas 21 and 22 are used in parallel and a read/write operation is performed on the RF tag. When the RF tag exists in front of the group of antennas 23 and 24, the antennas 23 and 24 are used in parallel and a read/write operation is performed on the RF tag. When the RF tag exists in front of the group of antennas 25 and 26, the antennas 25 and 26 are used in parallel and a write/read operation is performed on the RF tag. As such, the group of antennas that are used in parallel is changed according to the movement location of the RF tag. In order to indicate the group of antennas used in parallel by using the arrangement information 161 shown in FIG. 19, for example, a parallel group number such as 1 is given to the group of antennas 21 and 22.

Like the 'antennas 21 → 23 → 25' and 'antennas 22 → 24 → 26', the group of antennas that are arranged in the movement direction of the RF tag is designated as a movement direction group and a movement direction group number is given to a group element. For example, a movement direction group number (symbol) A is given to the antennas 21, 23, and 25 of individual elements that constitute the movement direction group 'antennas 21 → 23 → 25'. The movement direction group is a group that corresponds to the height of the attachment location of the RF tag that is attached to the moving product. Thus, the RF tag that is detected by an arbitrary antenna may be subjected to a read/write operation by another antenna that belongs to the same movement direction group as the corresponding antenna, as long as the product does not fall or cause collapse of cargo.

Since the group of antennas is disposed in parallel to correspond to the height-wise direction of the RF tag, in regards to the RF tag at the middle location of the group of antennas, the RF tag may be detected by the antennas that belong to plural movement direction groups or subjected to a read/write operation.

The configuration that is shown in FIGS. 3 to 5 is the same as the configuration of the first embodiment, and thus the description is omitted.

The third embodiment is different from the first embodiment in the command execution program and the schedule creation program started by the R/W control program 169 of FIG. 6 described in the first embodiment.

The schedule creation program creates the command executable time information 166, the execution command information 167, and the reservation command information 168 on the basis of the RF tag detection information 165. The process flow of the schedule creation program is the same as that of the schedule creation program (FIG. 15) in the second embodiment.

The command execution program executes reserved commands on the basis of the command executable time information 166, the execution command information 167, and the reservation command information 168 and executes non-reserved commands in an available time in which a reservation is not made.

FIG. 20 is a diagram illustrating an example of RF tag detection information 165 of when executing an RF tag detection program of an R/W control program (S1691 of FIG. 6). Specifically, FIG. 20 shows a result obtained when four RF tags T1, T2, T3, and T4 are detected by the antenna 21 at the time 10:00:00.000 and a result obtained when two RF tags T0 and T2 are detected by the antenna 22 at the time 10:00:00.150. Since the schedule creation program has the same flow as that of the second embodiment, the schedule creation program will be described with reference to FIG. 15. The schedule creation program starts after executing the RF tag detection program by the R/W control program 169 (S1692 of FIG. 6), and creates the reservation command information 168 using the RF tag detection information 165. In accordance with the execution of the RF tag detection program, an antenna that becomes active when the execution of the schedule creation program starts is the antenna 22.

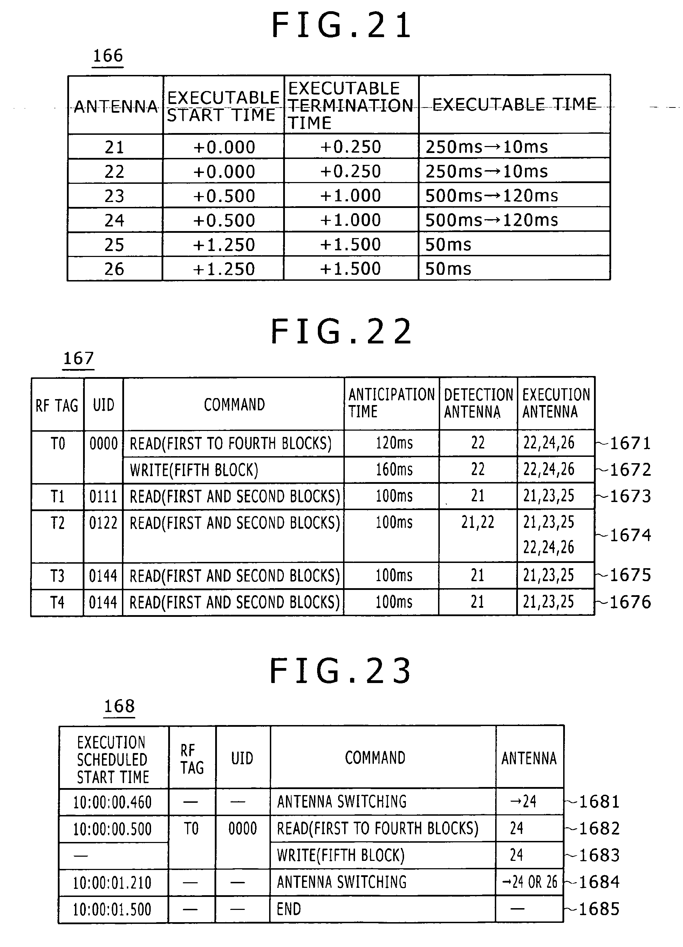

The schedule creation program creates the command executable time information 166 on the basis of the arrangement information 161 (FIG. 19) and the RF tag movement information 164 (FIG. 5) (S2000). FIG. 21 shows command executable time information 166 for each antenna. A method of creating the command executable time information 166 is basically the same as that of the first embodiment (S1750 of FIG. 8). However, in the antenna arrangement according to this embodiment, since a group of antennas 21 and 22, a group of antennas 23 and 24, and a group of antennas 25 and 26 are used in parallel, this point is considered. First, in regards to the antennas 21, 23, and 25, command executable time is calculated in the same method as the first embodiment. Next, the antennas 21 and 22 are antennas that are used in parallel and have the same size, and thus the same command executable time is allocated to each of the antennas. This is applicable to the other antennas.

The schedule creation program adjusts the command executable time information 166 in accordance with a termination anticipation time of the schedule creation program (S2005). When the termination anticipation time of the schedule creation program is set as 10:00:00.240, the corresponding program is executed in the same method as the first embodiment (S1755 of FIG. 8), and the command executable time of each of the antennas 21 and 22 becomes 250 ms - 240 ms = 10 ms.

The schedule creation program creates the execution command information 167 on the basis of the command indication information 162 (FIG. 3), the command execution performance information 164 (FIG. 4), and the RF tag detection information 165 (FIG. 20) (S2010). FIG. 22 shows the execution command information 167. The execution command information 167 includes information that indicates commands to be executed, anticipation time needed to execute the commands, and an antenna used at the time of detecting the target RF tag, which corresponds to the target RF tag.

Since the RF tag T0 is detected by the antenna 22, the antenna 22 is set as the detection antenna. Meanwhile, since the RF tag T2 is detected by the two antennas 21 and 22, the antennas 21 and 22 are set as the detection antennas. In the antennas that belong to the same movement direction group as the antenna that have detected the RF tag, the possibility of performing a read/write operation on the corresponding RF tag is high, and thus these antenna are set as execution antennas. For example, since the antennas that belong to the same movement direction group B as the antenna 22 are the antennas 22, 24, and 26, the antennas 22, 24, and 26 are set as the execution antennas of the command 1671 with respect to the RF tag T0 that has been detected by the antenna 22.

The schedule creation program sorts commands that are included in the execution command information 167 (S2015). Since the sort reference is the same as that of the first embodiment, the commands 1671 and 1672 become high-level commands.

The schedule creation program executes Steps S2025 to S2040 by the number of commands that are included in the execution command information 167 (S2020 and S2045). First, the commands 1671 and 1672 with respect to the same RF tag are selected.

The schedule creation program searches an antenna that can execute a command (S2025). The commands 1671 and 1672 are commands that are executed with respect to the RF tag T0, and a total sum of command execution anticipation times is 280 ms. If referring to the command executable time information 166 of FIG. 21, antennas that have a command executable time of 280 ms or more are the antennas 23 and 24. The execution antenna of the commands 1671 and 1672 is the antenna 24 when referring to the execution command information 167.

In the schedule creation program, the commands 1671 and 1672 can be executed by the antenna 24 (S2030), and can be executed by only the antenna 24. It is assumed that the commands need to be reserved (S2035), and the commands 1671 and 1672 are added to the reservation command information 168 as the commands 1682 and 1683 (S2040).

The schedule creation program selects the command 1673 from the execution command information 167 of FIG. 22 and searches an antenna that can execute the command 1673 (S2025). Since the anticipation time of the command 1673 is 100 ms, if referring to the command execution time information 166 of FIG. 21, the corresponding command can be executed by the antennas 23 and 25 (S2030). Since the corresponding command can be executed by plural antennas 24 and 26 (S2035), the corresponding command does not need to be reserved.

In the same method, if Steps S2025 to 2040 are executed with respect to the commands 1674, 1675 and 1676 of the execution command information 167 of FIG. 22, all of the commands do not need to be reserved. Accordingly, only the commands 1682 and 1683 are included in the reservation command information 168 of FIG. 23.

The schedule creation program adds an antenna switching command to the reservation command information 168 (S2050). The current active antenna 22 needs to be switched into the antenna 23 or 24, and the antenna 23 or 24 needs to be switched into the antenna 25 or 26. It can be understood that it takes 40 ms to switch the antenna on the basis of the command execution performance information 163 of FIG. 4. In order to know the executable start time of the antenna 23 or 24 and the antenna 25 or 26 on the basis of the command executable time information 166 of FIG. 21, antenna switching is set to be executed according to the executable start time of each antenna. The antenna 23 or 24 adds a command 1681 that instructs the executable start time to be switched into 10:00:00.460 earlier than 10:00:00.500 by 40 ms, and the antenna 25 or 26 adds a command 1684 that instructs the executable start time to be switched into 10:00:01.210 earlier than 10:00:00.250 by 40 ms.

The command, which is reserved to be executed after switching the antenna according to the command 1681, is the command 1682 that is executed by the antenna 24. Accordingly, the antenna switching destination in the command 1681 is changed from the antenna 23 or 24 to the antenna 24. FIG. 23 shows the changed state.

The schedule creation program adds a command indicating termination to the reservation command information 168, such that the command execution program is terminated when the RF tag is beyond a command executable range of the final antenna (S2055). Since the antenna 26 is the final antenna, the schedule creation program adds a command 1685 to the reservation command information 168 of FIG. 23, such that the corresponding program is terminated at the command executable termination time 10:00:01.500 of the antenna 26.

In this embodiment, since only the commands 1671 and 1672 are reserved, the reservation is made by only one antenna 24 between the parallel antennas (antennas 23 and 24). For example, when a reservation is already made to use the antenna 24 and the antenna 23 is reserved, it is needed to determine whether the program can be executed including the switching command used to switch the antenna into the antenna 23. When the reservation is added, an antenna switching command needs to be also added.

As described above, the process flow of the schedule creation program of FIG. 15 in the second embodiment is the same as the process flow in the third embodiment. Since the second embodiment and the third embodiment are different from each other in the number or arrangement of antennas, it can be understood from the above description that the processed information is different.

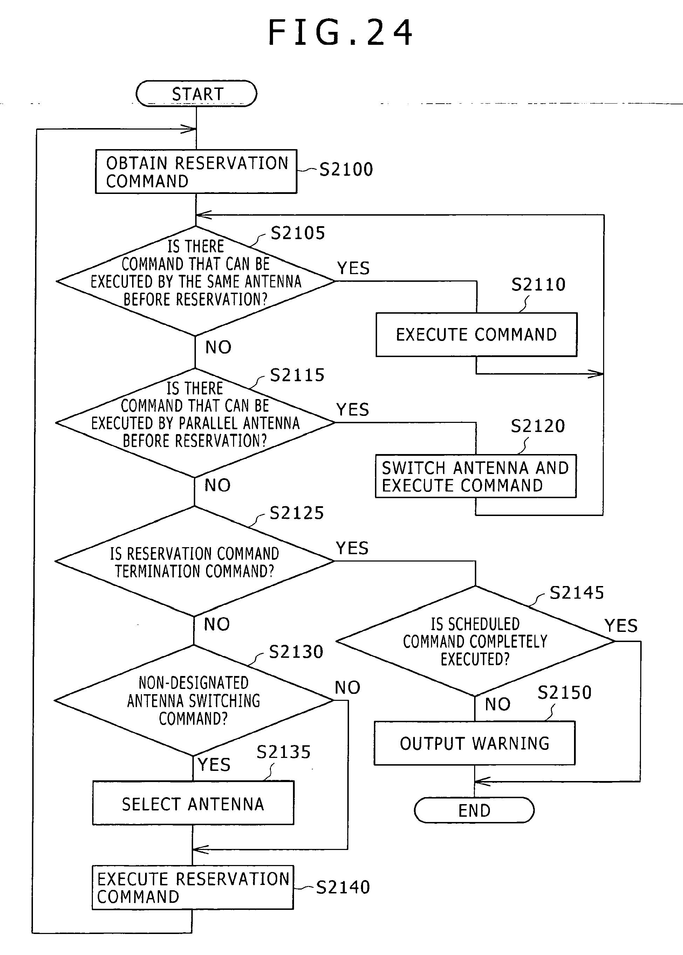

FIG. 24 is a flowchart illustrating a process flow of a command execution program. The command execution program starts after executing the schedule creation program by the R/W control program 169 (S1693 of FIG. 6), and controls the R/W 2 on the basis of the reservation command information 168 of FIG. 23. The R/W 2 is controlled such that non-reserved commands are executed at time in which a reservation is not made. The operation of the command execution program will be described with reference to FIG. 24.

The command execution program obtains a command from the reservation command information 168 (S2100). Accordingly, the command execution program obtains a command, which is not executed and at the head, from the reservation command information 168 of FIG. 23.

Before executing the command that is obtained in Step S2100, the command execution program investigates whether there is a command that can be executed by the current active antenna (S2105). The command execution program searches a command that can be executed by the current active antenna 22 before executing the command 1681. If the current time is set to 10:00:00.240, the start time of the command 1681 is at 10:00:00.460, the command executable termination time by the current active antenna 22 is 10:00:00.250 from the command executable time information 166 of FIG. 21, and thus the command executable time by the antenna 22 is 250 ms - 240 ms = 10 ms. If a command that is not reserved but can be executed is searched from the execution command information 167 of FIG. 22, this command (that can be executed at time shorter than 10 ms) does not exist.

Before executing the command that is obtained in Step S2100, the command execution program investigates whether there is a command that can be executed by an antenna parallel to the current active antenna (S2115). The antenna that is disposed parallel to the current active antenna 22 is the antenna 21, but there is no command that can be executed within 10 ms.

The command execution program determines whether the command obtained in Step S2100 is a termination command (S2125). The command 1681 is not the termination command.

The command execution program investigates whether the selected command 1681 is a non-designated antenna switching command (S2130). The command 1681 is an antenna switching command for switching the antenna into the antenna 24, and is not a command that does not designate an antenna.

The command execution program is in a waiting state until the set time, and then executes the command obtained in Step S2100 (S2140). Accordingly, the command execution program is in a waiting state until 10:00:00.460, and executes an antenna switching command 1681 for switching the antenna into the antenna 24. It is assumed that the time of 40 ms is needed to execute the command, and the time becomes 10:00:00.500.

The command execution program obtains a command 1682 from the reservation command information 168 of FIG. 23 (S2100).

The command execution program investigates whether there is a command that can be executed by the current active antenna 24 before executing the command 1682 (S2105). Since the current time is 10:00:00.500 and the start time of the command 1682 is at 10:00:00:500, the command executable time by the antenna 24 becomes 0 ms. This command does not exist. There is no command that can be executed by the antenna 23 that is disposed parallel to the current active antenna 24 at 0 ms (S2115). The command 1682 is not a termination command (S2125). The command 1682 is a read command, and is not a non-designated antenna switching command (S2130).

Since the current time is at 10:00:00.500, the command execution program immediately executes the command 1682 (S2140). It is assumed that the time of 120 ms is needed to execute the command 1682, and the time becomes 10:00:00.620.

The command execution program obtains the command 1683 from the reservation command information 168 of FIG. 23 (S2100).

The command execution program investigates a command that can be executed by the current active antenna 24 before executing the command 1683 (S2105). Since the execution scheduled start time is not set, the command 1683 is a command that is immediately executed after the previous execution of the command 1682. Accordingly, there is no command that can be executed before executing the command 1683, and there is no command that can be executed by the antenna 23 that is disposed parallel to the current active antenna 24 (S2115). The command 1683 is not a termination command (S2125).

Since the command 1683 is a write command but not a non-designed antenna switching command (S2130), the command 1683 is immediately executed (S2140). It is assumed that the time of 160 ms is needed to execute the command 1683, and the time becomes 10:00:00.780.

The command execution program obtains the command 1684 from the reservation command information 168 of FIG. 23 (S2100).

The command execution program investigates a command that can be executed by the current active antenna 24 before executing the command 1684 (S2105). Since the current time is 10:00:00.780, the start time of the command 1684 is 10:00:01.210, and the command executable termination time of the antenna 24 is 10:00:01.000, the command executable time by the antenna 24 becomes 1000 ms - 780 ms = 220 ms. If a command that is not reserved but can be executed is searched from the execution command information 167 of FIG. 22, the command 1674 is discovered.

The command execution program executes the command 1674 (S2110). It is assumed that the time of 100 ms is needed to execute the command 1674, and the time becomes 10:00:00.880.

The command execution program investigates a command that can be executed by the current active antenna 24 before executing the command 1684 (S2105). Since the current time is 10:00:00.880, the start time of the command 1684 is 10:00:01.210, and the command executable termination time of the antenna 24 is 10:00:01.000, the command executable time by the antenna 24 becomes 1000 ms - 880 ms = 120 ms. If a command that is not reserved but can be executed is searched from the execution command information 167 of FIG. 22, this command does not exist.

The command execution program investigates whether there is a command that can be executed by the antenna 23 parallel to the current active antenna 24 (S2115). Since the current time is 10:00:00.880, the start time of the command 1684 is at 10:00:01.210, and the command executable termination time of the antenna 23 is 10:00:01.000, the command executable time by the antenna 23 becomes 1000 ms - 880 ms = 120 ms. If the executable command is searched from the execution command information 167 of FIG. 22, including an antenna switching time needed to switch the antenna 24 into the antenna 23, there is no executable command (S2115).

In the command execution program, the command 1684 is not a termination command (S2125), but an antenna switching command, and the antenna that corresponds to the antenna switching destination is the antenna 25 or 26, and a non-designated antenna (S2130).

The command execution program selects the antenna that corresponds to the antenna switching destination (S2135). If referring to the execution command information 167 of FIG. 22, commands that can be executed by the antenna 25 but is not executed are three commands 1673, 1675, and 1676. There is no command that can be executed by the antenna 26 but is not executed. Accordingly, the antenna 25 is selected.

The command execution program is in a waiting state until 10:00:01.210, and executes an antenna switching command for switching the antenna into the antenna 25 (S2140). It is assumed that the time of 40 ms is needed to execute the command 1684, and the time becomes 10:00:01.250. The command execution program obtains the command 1685 from the reservation command information 168 of FIG. 23 (S2100).

Hereinafter, Steps S2105 and S2110 are repeatedly executed, and the commands 1673 and 1675 are executed. As a result, it is assumed that the time becomes 10:00:01.450. The command execution program investigates a command that can be executed by the current active antenna 25 before executing the command 1685 (S2105). The command 1676 remains in the execution command information 167 of FIG. 22. However, since the anticipation time of the command 1676 is 100 ms and the time when the antenna 25 becomes active is 500 ms - 450 ms = 50 ms, there is no executable command.

In the command execution program, there is also no command that can be executed by the antenna 26 that is disposed parallel to the current active antenna 25 (S2115). The command 1685 is a termination command (S2125).

The command execution program checks whether a non-executed command exists in the reservation command information 168 of FIG. 23 and the execution command information 167 of FIG. 22 (S2145) Since the command 1676 of the execution command information 167 of FIG. 22 is not executed, a warning that indicates which command is not executed with respect to which RF tag (UID) is output (S2150), and a process is terminated.

In the second and third embodiments, in the case where it fails to execute the command by the command execution program, when it is investigated whether an executable command exists, if the failed command can be executed again, the corresponding command may be selected and executed again.

If the second embodiment and the third embodiment are compared, the basic process flow is the same. However, as the process result, non-executed commands remain in the third embodiment. This is because of a restriction that it can be used by only the antenna that belongs to the predetermined movement direction group, and overhead of antenna switching when the number of antennas increases, particularly, overhead of antenna switching between the antennas forming groups (antenna switching between the movement direction groups).

As described above, the proper movement speed of the RF tag is set on the basis of the arrangement information of the antennas subjected to the restriction as hardware and execution performance information of the commands, thereby constructing a system in which commands can be executed again.

In each embodiment, the description has been given to the case where, while the antennas connected to the R/W are switched, the RF tag is detected and the R/W command is executed. That is, when the relationship between the R/W and the antennas is 1:N, it is effective for the case where the structure of the R/W is complex or a size thereof is large or the R/W is expensive. However, in the case where the structure of the R/W is simple or a size thereof is small or the R/W is cheap, the relationship between the R/W and the antenna may be 1:1. Even in this case, if the correlation between each antenna connected to each R/W and a moving RF tag is maintained as described in each embodiment, it can be understood that a technology of the invention may be easily applied.

## Claims

1. A method of controlling a reader/writer to perform a read/write operation on RF tags that are attached to a moving body through antennas, comprising:
allowing a communication unit to receive detection information of the RF tags;
allowing a control unit to create a schedule that determines execution timing of a control command of the reader/writer to perform a data read/write operation on the RF tags in accordance with the detection information; and
allowing the control unit to transmit the control command of the reader/writer to the reader/writer through the communication unit in accordance with timing that is determined in the created schedule,
wherein the reader/writer performs a data read/write operation on the RF tags through the antennas in accordance with the control command of the reader/writer.

2. The method according to claim 1,
wherein the control command of the reader/writer that performs a data read/write operation on the RF tags is transmitted to the reader/writer through any one of a plurality of antennas that are disposed along a movement direction of the moving body.

3. The method according to claim 2,
wherein the creating of the schedule includes:
extracting identification information used to identify the RF tags from the detection information;
specifying the control command of the reader/writer from the identification information of the RF tags;
designating an antenna, which is used to execute a read operation in accordance with the specified control command of the reader/writer, from the plurality of antennas using information on the control command of the reader/writer; and
creating the schedule using the identification information used to identify the designated antenna and the movement situation of the moving body.

4. The method according to claim 3,
wherein the designating of the antenna includes:
calculating a readable time of each of the antennas on the basis of a movement speed of the moving body and information on a read range of each of the plurality of antennas; and
designating the antenna from the plurality of antennas on the basis of information indicating time needed to execute the control command that is information on the control command of the reader/writer and the calculated readable time of each of the antennas.

5. The method according to claim 2, further comprising:
when there are a plurality of control commands of the reader/writer,
selecting the control command of the reader/writer where a schedule needs to be created from the plurality of control commands of the reader/writer; and
executing the control command of the reader/writer selected under the predetermined condition in an available time on the schedule,
wherein the creating of the schedule creates a schedule that determines execution timing of the selected control command of the reader/writer.

6. The method according to claim 5, further comprising:
outputting a warning when there is the control command of the reader/writer that cannot be executed by the plurality of antennas.

7. The method according to claim 5, further comprising:
executing the failed control command in an available time on the schedule when execution of the control command of the reader/writer fails.

8. The method according to claim 1, further comprising:
outputting a warning when there is the control command of the reader/writer where schedule creation is impossible in the creation of the schedule.

9. A reader/writer control apparatus that is connected to a reader/writer that performs a data read/write operation on RF tags that are attached to a moving body, comprising:
a control unit that creates a schedule that determines execution timing of a control command of the reader/writer; and
a communication unit that is connected to antennas through the reader/writer, receives detection information of the RF tags from the reader/writer, and transmits the control command of the reader/writer to the reader/writer in accordance with timing that is determined in the created schedule.

10. The reader/writer control apparatus according to claim 9,
wherein the communication unit transmits the control command of the reader/writer to the reader/writer through any one of a plurality of antennas that are disposed along a movement direction of the moving body.

11. The reader/writer control apparatus according to claim 10,
wherein the control unit extracts identification information used to identify the RF tags from the detection information, specifies the control command of the reader/writer from the identification information of the RF tags, designates an antenna, which is used to execute a read operation in accordance with the specified control command of the reader/writer, from the plurality of antennas using information on the control command of the reader/writer, and creates the schedule using identification information used to identify the designated antenna and the movement situation of the moving body.

12. The reader/writer control apparatus according to claim 11,
wherein the control unit calculates a readable time of each of the antennas on the basis of a movement speed of the moving body and information on a read range of each of the plurality of antennas, and determines identification information of the antenna designated from the plurality of antennas on the basis of information indicating time needed to execute the control command that is information on the control command of the reader/writer and the calculated readable time of each of the antennas.

13. The reader/writer control apparatus according to claim 10,
wherein, when there are a plurality of control commands of the reader/writer, the control unit selects the control command of the reader/writer where a schedule needs to be created from the plurality of control commands of the reader/writer with respect to the RF tags, and
the communication unit transmits the control command of the reader/writer not selected under the predetermined condition in an available time on the schedule.

14. The reader/writer control apparatus according to claim 13,
wherein the communication unit notifies a control command of the reader/writer to instruct that the control command of the reader/writer is executed in an available time on the schedule when execution of the control command of the reader/writer fails.

15. The reader/writer control apparatus according to claim 9,
wherein the control unit outputs a warning when there is the control command of the reader/writer where schedule creation is impossible during the creation of the schedule.
